## Europäisches Patentamt

## European Patent Office

## Office européen des brevets

(11) Veröffentlichungsnummer : **0 120 459**
**B1**

# EUROPÄISCHE PATENTSCHRIFT

(45) Veröffentlichungstag der Patentschrift :
15.06.88

(51) Int. Cl.⁴ : **H 04 Q   3/52**, H 04 Q   3/62,
**H 04 Q   3/54**

(21) Anmeldenummer : 84103115.6

(22) Anmeldetag : 21.03.84

(54) Schaltungsanordnung für eine kleine Wählnebenstellenanlage mit einer elektronische Koppelpunkte aufweisenden Koppeleinrichtung.

(30) Priorität : 23.03.83 DE 3310546

(43) Veröffentlichungstag der Anmeldung :
03.10.84 Patentblatt 84/40

(45) Bekanntmachung des Hinweises auf die Patenterteilung : 15.06.88 Patentblatt 88/24

(84) Benannte Vertragsstaaten :
AT BE CH DE FR GB IT LI NL SE

(56) Entgegenhaltungen :
FR-A- 2 174 499
GB-A- 2 068 684
US-A- 3 993 873
ERICSSON REVIEW, Band 58, Nr. 1, 1981, pages 30-37, Stockholm, SE; L. NYBERG: "Stored program controlled PABX, ASB 20"

(73) Patentinhaber : Siemens Aktiengesellschaft Berlin und München
Wittelsbacherplatz 2
D-8000 München 2 (DE)

(72) Erfinder : Altendorfer, Alois
Ottostrasse 1
D-8029 Sauerlach (DE)
Erfinder : Dotzauer, Ewald
Zugspitzstrasse 1a
D-8029 Sauerlach (DE)
Erfinder : Müller, Wolfgang, Dipl.-Ing.
Karwendelstrasse 4
D-8192 Geretsried 3 (DE)

**Beschreibung**

Die Erfindung betrifft eine Schaltungsanordnung für eine kleine Wählnebenstellenanlage, bei der unter Mitwirkung einer die Vermittlungsvorgänge abwickelnden Steuerrechnereinheit, die Zugriff zu Speichereinheiten hat, in denen die für die vermittlungstechnischen Abläufe notwendigen Informationen enthalten sind, interne und externe Verbindungen durch die Einstellung einer entsprechenden Koppeleinrichtung mit elektronischen Koppelpunkten möglich sind.

Durch den Einsatz einer Steuerrechnereinheit, die durch einen mit den entsprechenden Speichersystemen zusammenarbeitenden Mikroprozessor realisiert sein kann, sind in kleinen Wählanlagen umfangreiche Leistungsmerkmale ohne größeren Aufwand möglich. Solche Leistungsmerkmale sind beispielsweise die Kurzwahl, die berechtigten Teilnehmern ermöglicht häufig benötigte Verbindung durch Wahl einer Kurzrufnummer aufzubauen, die Wahlwiederholung, durch die die zuletzt gewählte externe Rufnummer wiederholt ausgegeben wird, das Aufschalten mit dem man sich bei einer besetzten Nebenstelle vermittels einer besonderen Hörtones bemerkbar machen kann, sowie die Rufumleitung durch die ein Anruf zu einer anderen vorbestimmten Sprechzelle geleitet wird. Diese und andere Leistungsmerkmale können unter der Voraussetzung eines programmgesteuerten Systems durch über entsprechende Eingabetasten vorzunehmendes Programmieren verändert werden. Es wird somit eine einfache Anpassung an die Bedürfnisse eines Anwenders erreicht. Als Koppelelemente der Koppelfeldeinrichtung werden neben elektromechanischen Elementen auch Halbleiterelemente, wie z. B. Feldeffekt-Transistoren verwendet. Auch bei einem einstufigen Aufbau des Koppelfeldes liegen in der Regel zumindest bei einer internen Verbindung zwei Koppelpunkte in Reihe. Durch die Verwendung elektronischer Koppelpunkte wird u. a. eine Verminderung der Geräuschentwicklung der Wählanlage erzielt.

Es ist die Aufgabe der Erfindung bei einer kleinen Wählnebenstellenanlage mit geringstmöglichen Aufwand eine Vereinfachung bei der Verbindungsherstellung und für das Wirksamwerden vermittlungstechnisch notwendiger Einheiten zu erreichen. Dies wird dadurch ermöglicht, daß die Koppelfeldeinrichtung aus zumindest der Summe aus der Anzahl der weiterführenden Verbindungsleitungen und der Anzahl der Teilnehmerstellen entsprechenden Anzahl von in integrierter Technik hergestellten Selektorbausteinen besteht, die jeweils mehrere, zumindest der Anzahl der Teilnehmer entsprechende Anschlußpunkte der ersten Art (z. B. Ausgänge) und einen einer Teilnehmerstelle bzw. einer Verbindungsleitung zuzuordnenden Anschlußpunkt der zweiten Art (Eingang) aufweist und bei denen über an entsprechenden Adresseneingängen von der Steuerrechnereinheit anzulegende Steuerinformationen ein Anschlußpunkt aus den Anschlußpunkten der ersten Art auswählbar und mit dem Anschlußpunkt der zweiten Art verbindbar ist, daß jeder der den Teilnehmerstellen zugeordneten Selektorbausteine über den Anschlußpunkt der zweiten Art (Eingang) mit einer der Teilnehmerstellen und über die Anschlußpunkte der ersten Art (Ausgänge) jeweils mit allen übrigen Teilnehmerstellen koppelbar ist und daß jeder der einer weiterführenden Verbindungsleitung zugeordneten Selektorbausteine über den Anschlußpunkt der zweiten Art (Eingang) mit der betreffenden Verbindungsleitung und über die Anschlußpunkte der ersten Art (Ausgänge) jeweils mit allen Teilnehmerstellen koppelbar ist.

Es werden für die Durchschaltung der Sprechverbindungen Selektorbausteine, die handelsübliche sogenannte Demultiplexer-Bausteine sein können, verwendet. Die einzelnen Verbindungen werden in Abhängigkeit von den Adreßinformationen, die von der Steuerrechnereinheit an die entsprechenden Auswahleingänge anzulegen sind, durchgeschaltet. Die Anwendung dieser Standardbausteine ermöglicht eine einfache Erweiterbarkeit ohne die Notwendigkeit Vorleistungen hierfür vorsehen zu müssen. Der einzelne Baustein schaltet für jede Teilnehmerstelle und für jede weiterführende Amtsleitung nur mit einem einzigen Koppelpunkt. Es ist somit übertragungstechnisch bei jeder Sprechverbindung ein Koppelpunkt geschlossen. Die verwendeten Standardbausteine ermöglichen einen einfachen Aufbau einer einstufigen Koppelfeldeinrichtung, durch die eine vollkommene Erreichbarkeit gegeben ist.

Im Zuge der Verbindungsherstellung sind während bestimmter Vermittlungsphasen für verschiedene Zwecke wie z. B. zur Auswertung und zur Erzeugung von Hörtönen Einrichtungen anzuschalten. Diese Einrichtungen können in Weiterbildung der Erfindung zusätzlich als zentrale Einrichtungen an nicht durch Teilnehmerstellen belegte Anschlußpunkte der einzelnen Selektorbausteine angeschaltet werden. An Stelle eines Bausteines mit der entsprechenden Anzahl von notwendigen Anschlußpunkten kann auch die funktionelle Zusammenschaltung zweier Bausteine mit einer niedrigen Zahl von Anschlußpunkten vorgenommen werden, wodurch wiederum die erforderliche Anschlußanzahl erreicht wird.

Gemäß einer Weiterbildung der Erfindung ist der zumindest den weiterführenden Verbindungsleitungen jeweils zugeordnete Selektorbaustein über einen Anschlußpunkt mit einem auf die Leitungsverhältnisse wertemäßig abgestimmten Abschlußwiderstand verbindbar. Durch die Anschaltung eines derartigen Widerstandes an einen nicht von einer Teilnehmerstelle besetzten Anschlußpunktes kann zusätzlich vermittels des Selektorbausteines im Rückfragezustand einer Sprechverbindung und in den mit Beginn einer Belegung zwischenzeitlich eintretenden Ruhezuständen die Teilnehmeranschlußleitung abgeschlossen werden.

Gemäß einer Weiterbildung der Erfindung sind diejenigen Einrichtungen, die die in einer bestimmten Vermittlungsphase notwendigen zusätzlichen Funktionen ermöglichen als zentrale Einrichtungen über jeweils weitere Selektorbausteine anschaltbar. Sowohl für diese Anschaltung als auch für den Aufbau der Koppelfeldeinrichtung sind zweckmäßigerweise integrierte C-MOS-Bausteine anzuwenden.

Gemäß einer Weiterbildung der Erfindung wird als Verknüpfungselement zwischen der Koppelfeldeinrichtung und den weiterführenden Verbindungsleitungen sowie den Teilnehmeranschlußschaltungen ein Übertrager verwendet, wobei für die Primär- und die Sekundärseite eines jeden Übertragers eine ungleiche Windungszahl gewählt ist und die Wicklung mit der höheren Windungszahl jeweils zumindest mit einem Anschlußpunkt eines der für den Aufbau der Koppelfeldeinrichtung verwendeten Selektorbausteine verbunden ist. Durch die Anwendung eines Übertragers wird die Speisespannung von den Bausteinen abgekoppelt. Durch die Erhöhung des Übersetzungsverhältnisses der Übertrager wird insbesondere bei der Anwendung von C-MOS-Bausteinen eine Verminderung der Durchgangsdämpfung erzielt. Dadurch wird ein beispielsweise durch die Einschaltung von zusätzlichen Verstärkern durchzuführender Dämpfungsausgleich entbehrlich.

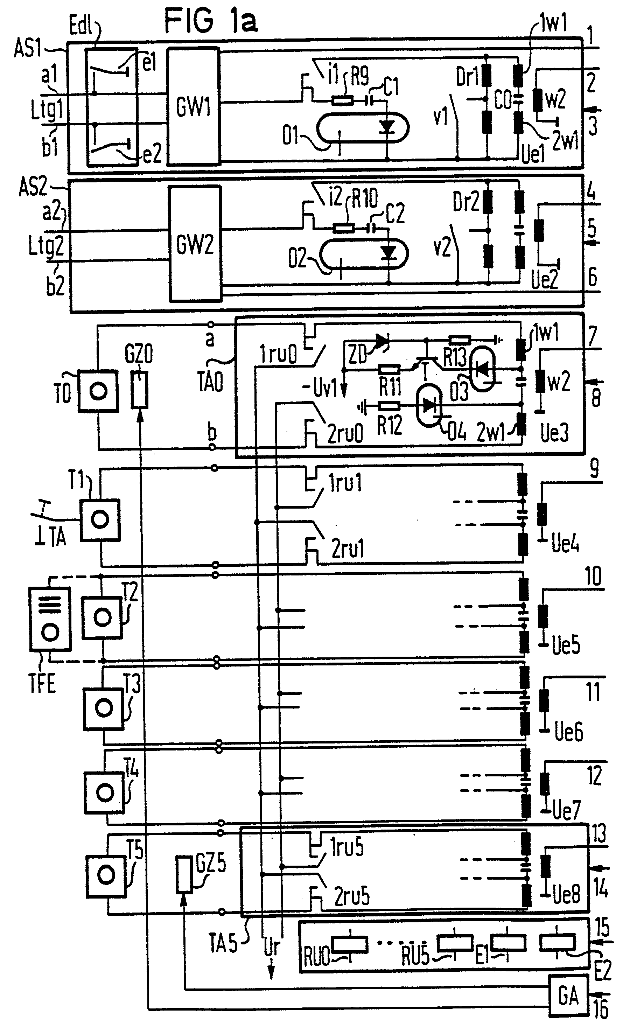

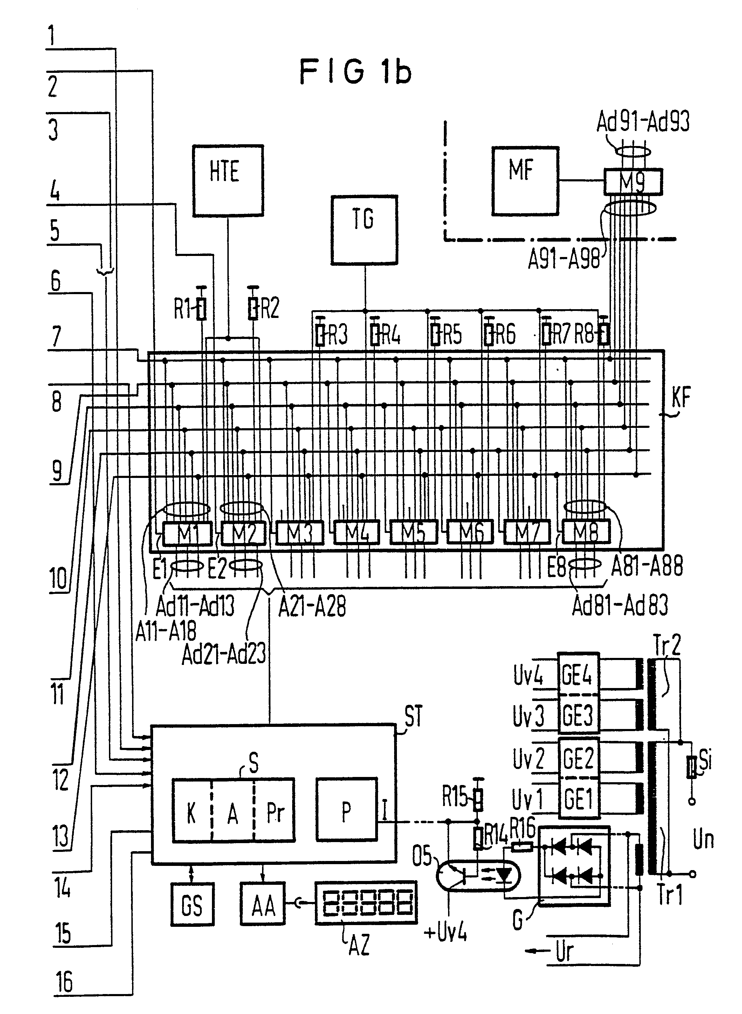

Nachfolgend ist an Hand der Zeichnung ein Ausführungsbeispiel der Erfindung beschrieben. Die Zeichnung ist in den Figuren 1a und 1b gegliedert. Diese Figuren zeigen zusammen eine kleine Wählnebenstellenanlage, bei der die erfindungsgemäßen Maßnahmen vorgesehen sind. Die sich in den Figuren 1a und 1b entsprechenden Leitungsschnittpunkte sind in den beiden Darstellungen gleich nummeriert.

Die in den Figuren dargestellte kleine Wählnebenstellenanlage soll die für Anlagen einer solchen Baustufe vorgesehenen internen und externen Verbindungsmöglichkeiten aufweisen. Bei dem ihr zugrunde liegenden programmgesteuerten System können eine Reihe von Leistungsmerkmalen in einfacher Weise verwirklicht werden. Als solche sind beispielsweise die Kurzwahl, die Wahlwiederholung, das Aufschalten, die Wahlkontrolle sowie die Rufumleitung hervorzuheben. Von den vielfältigen Betriebsmöglichkeiten einer solchen kleinen Wählnebenstellenanlage werden an Hand der auszugsweisen Strukturdarstellung nur solche erläutert, die im vorgegebenen Rahmen wesentlich sind.

Je nach Ausbaustufe kann die kleine Wählnebenstellenanlage über eine oder mehrere weiterführende Leitungen mit anderen Anlagen verbunden sein. Im Ausführungsbeispiel sind zwei derartige Leitungen nämlich die Leitungen Ltg1 und Ltg2 vorgesehen. Als Amtsleitungen verbinden diese die Anlage mit dem öffentlichen Netz. Zumindest eine der vorhandenen weiterführenden Leitungen kann auch für den sogenannten Querverbindungsverkehr die Anlage mit einer weiteren Nebenstellenanlage verbinden. Wird die Anlage als Zweit-Nebenstellenanlage eingesetzt, so erfolgt die Verbindung zur Erst-Nebenstellenanlage über eine sogenannte Nebenanschlußleitung. Die Verbindungen ins öffentliche Netz werden über die Erst-Nebenstellenanlage als Hauptanlage aufgebaut. Beim Fernsprechverkehr über eine Querverbindungsleitung bzw. über eine Nebenanschlußleitung ist es für bestimmte vermittlungstechnische Vorgänge erforderlich Erdpotential an die Leitung zur jeweiligen Gegenanlage anzuschalten. Diese soll durch die der Einheit Edl zugehörigen Kontakte e1 und e2 erfolgen. Bei einer Amtsleitung werden diese Kontakte nicht benötigt. Jeder weiterführenden Leitung Ltg1 bzw. Ltg2 ist eine Anschlußeinheit AS1 bzw. AS2 zugeordnet. Sind über diese Leitungen Verbindungen zum öffentlichen Netz herstellbar, so sind diese Anschlußeinheiten sogenannte Amtssätze. Sie enthalten eine Gebührenimpuls-Empfangsweiche GW1 bzw. GW2. Die eintreffenden Gebührenimpulse werden aufgrund einer entsprechenden Abtastung durch eine Steuerrecheneinheit ST, die die gesamte Steuerung der vermittlungstechnischen Funktion vornimmt, erkannt. Sie können getrennt für jede Leitung und/oder für jede Teilnehmerstelle erfaßt und als jeweilige Gebührensumme in einem Gebührenspeicher GS abgelegt werden. Es besteht auch die Möglichkeit mit jedem Zählpuls einen Fortschalteimpuls für einen an der jeweiligen Teilnehmerstelle angeordneten Gebührenzähler GZ zu erzeugen.

Jede Anschlußeinheit AS1 bzw. AS2 enthält eine aus dem Widerstand R9, dem Kondensator C1 und dem Optokoppler O1 bzw. dem Widerstand R10, dem Kondensator C2 und dem Optokoppler O2 bestehende Anrufbrücke und die sogenannte Amtshaltedrossel Dr1 bzw. Dr2. Die Wicklung der Amtshaltedrossel ist zweigeteilt, wobei ein Wicklungsteil während der Wahlimpulse durch einen entsprechend betätigten Kontakt v1 bzw. v2 überbrückt ist. Für den Fall, daß für den Aufbau einer externen Verbindung über eine weiterführende Leitung keine Mehrfrequenz-Codewahl vorgesehen ist werden die Wahlimpulse durch den Kontakt i1 bzw. i2 wirksam angelegt. Die Betätigung dieser Impulskontakte wird aufgrund der von einem Teilnehmer eingegebenen Wahlinformation durch die Steuerung ST veranlaßt. Der Auswertekreis des in jeder Anrufbrücke enthaltenen Optokopplers O1 bzw. O2 ist nicht weiter dargestellt. Dieser den Fototransistor des jeweiligen Optokopplers enthaltende Auswertekreis wird gleichfalls kontinuierlich abgetastet, wodurch die durch einen ankommenden Ruf erkennbare Zustandsänderung von der Steuerung registriert wird. Dadurch können die nachfolgenden Funktionsschritte bewirkt werden. Die Anschlußeinheit AS1 bzw. AS2 ist zum Koppelfeld KF hin mit einem Übertrager Ue1 bzw. Ue2 abgeriegelt. Die Sprechadern a1 und b1 sind bezogen auf die Leitung Ltg1 über die Wicklungen 1w1 und 2w1 sowie über den Kondensator CO in an sich bekannter Weise miteinander verbunden. Die Verknüpfung zum Koppelfeld erfolgt durch die Wicklung w2. Für den die Leitung Ltg2 abschließenden Übertrager Ue2 gilt entsprechendes.

Die Einrichtungen der in den Figuren dargestellten kleinen Nebenstellenanlage sind in steckbare Baugruppen gegliedert. Durch einen solchen modularen Aufbau ist eine bestmögliche Anpassung an die vielfältigen Wünsche des Betreibers einer solchen Anlage möglich. Es ist ein Ausbau mit insgesamt sechs Teilnehmerstellen, nämlich einer Abfragestelle T0 und weiteren Teilnehmerstellen T1 bis T5 gezeigt. Anstelle einer Teilnehmerstation kann, wie dies in der Zeichnung angedeutet ist, eine sogenannte Türfreisprecheinrichtung TFE vorgesehen sein. Faßt man die für eine bestimmte Anzahl von Teilnehmerstellen, beispielsweise für drei Teilnehmerstellen erforderlichen Einheiten, nämlich die jeder Teilnehmerstelle zugeordnete Anschlußschaltung TA und die entsprechenden Anteile des Koppelfeldes KF in einer steckbaren Einheit zusammen, so ist je nach Bedarf in einfacher Weise ein unterschiedlicher Ausbau möglich. In der gezeigten Ausführung können gleichzeitig zumindest zwei Amtsgespräche gehend und kommend mit je einem Rückfragegespräch sowie ein Interngespräch geführt werden.

Das Koppelfeld KF zur Durchschaltung der einzelnen Sprechwege ist mit Selektorbausteinen aufgebaut. Jeder weiterführenden Leitung und jeder Teilnehmerstelle T0 bis T5 ist ein solcher Selektorbaustein, zugeordnet. Es kann hierfür ein handelsüblicher hochintegrierter C-MOS-Baustein, der eine Demultiplexerfunktion ermöglicht, verwendet werden. Die Anzahl der Anschlußpunkte für die Auswahlleitungen muß zumindest der, im Endausbau vorhandenen Anzahl von Teilnehmerstellen entsprechen. Da im Ausführungsbeispiel insgesamt sechs Teilnehmerstellen vorgesehen sind, wird ein Standardbaustein mit acht auszuwählenden Anschlußpunkten verwendet. Die beiden für die Teilnehmerstellen nicht benötigten Anschlußpunkte werden anderweitig beschaltet. Bei einer größeren Anzahl von Teilnehmerstellen ist ein Baustein mit einer ausreichenden Anzahl von Anschlußpunkten zu wählen bzw. es kann die Anzahl der Anschlußpunkte durch Zuschalten eines weiteren Bausteines zu dem an sich hinsichtlich seiner Anschlußmöglichkeiten nicht ausreichenden Baustein erweitert werden.

Den weiterführenden Leitungen Ltg1 und Ltg2 sind die Bausteine M1 und M2 zugeordnet. Die Koppelfeldseite des Übertragers Ue1 bzw. Ue2 ist mit dem Eingang E1 des Selektorbausteines M1 bzw. mit dem Eingang E2 des Selektorbausteins M2 verbunden. Ein Ausgang eines jeden dieser Bausteine ist jeweils in gleicher Weise mit einer Teilnehmerstelle gekoppelt. Von den jeweils acht Ausgängen A11 bis A18 des Selektorbausteines M1 bzw. A21 bis A28 des Selektorbausteins M2 sind also die Ausgänge A11 bis A16 und die Ausgänge A21 bis A26 jeweils mit einer der Teilnehmerstellen T0 bis T5 unmittelbar verbunden. Dies erfolgt wiederum über die koppelfeldseitige Wicklung eines die Teilnehmeranschlußleitung abschließenden Übertragers. Bezogen auf die einzelnen Teilnehmerstellen sind dies die Übertrager Ue3 bis Ue8, die jeweils der einer Teilnehmerstelle zugeordneten Teilnehmeranschlußschaltung, nämlich den Teilnehmeranschlußschaltungen TA0 bis TA5, zugehörig sind. Mit Ausnahme der Teilnehmeranschlußschaltung TA0 und TA5 sind diese in der Figur weder als Funktionseinheit besonders hervorgehohen noch bezeichnet.

Den Teilnehmerstellen T0 bis T5 ist jeweils einer der Selektorbausteine M3 bis M8, die vom gleichen Typ wie die Selektorbausteine M1, M2 sind, zugeordnet. Mit Ausnahme des Selektorbausteines M8 sind ihre Eingänge bzw. die ausgangsseitigen Anschlußpunkte nicht weiter bezeichnet. Der Eingang E eines jeden dieser Selektorbausteine M3 bis M8 ist jeweils mit einer Teilnehmerstelle gekoppelt. Dies erfolgt wiederum durch die Anschaltung an die koppelfeldseitige Wicklung des die Teilnehmeranschlußleitung abschließenden Übertragers. Der Eingang des Selektorbausteines M3 ist demnach mit der entsprechenden Wicklung des Übertragers Ue3, der Eingang des Selektorbausteines M4 mit der entsprechenden Wicklung des Übertragers Ue4 verbunden. Entsprechendes gilt dann für die Selektorbausteine M5 bis M8. Ein jeder der Selektorbausteine M3 bis M8 ist über einen seiner ausgangsseitigen Anschlußpunkte jeweils mit denjenigen Teilnehmerstellen gekoppelt, mit denen er eingangsseit nicht verbunden ist. Beispielsweise ist der Selektorbaustein M3, der eingangsseitig mit der Teilnehmerstelle T0 gekoppelt ist, über fünf Einzelausgänge mit den restlichen Teilnehmerstellen, nämlich den Teilnehmerstellen T1 bis T5, in der bereits geschilderten Weise verbunden. Für die anderen Selektorbausteine gilt Entsprechendes. Der gewünschte Ausgang, der für jeden Selektorbaustein mit dem Eingang galvanisch zu verbinden ist, wird dadurch ausgewählt, daß von der Steuerrechnereinheit ST an die jeweiligen, Adreßeingänge Ad die entsprechende binärcodierte Adresse angelegt wird. Für den Selektorbaustein M1 sind die Adresseneingänge mit Ad11 bis Ad13 bezeichnet. Für die Adresseneingänge der übrigen Selektorbausteine gilt dann Entsprechendes. Für die Herstellung einer Sprechverbindung wird somit sowohl für eine externe als auch für eine interne Verbindung nur ein Koppelpunkt geschaltet. Zumindest zwei weitere, in gleicher Weise auszuwählende Anschlußpunkte eines jeden Selektorbausteins des Koppelfeldes sind in vorteilhafter Weise mit einem Abschlußwiderstand bzw. mit einer in bestimmten Vermittlungsphasen wirksam an eine Leitung anzulegende zentrale Einheiten beschaltet. Der Abschlußwiderstand für die weiterführenden Leitungen Ltg1 und Ltg2 ist mit R1 bzw. R2 bezeichnet. Über die anderen Selektorbausteine ist in bestimmten Vermittlungsphasen dann jeweils einer der Abschlußwiderstände R3 bis R8 wirksam anzuschalten. Dies wird von der Steuerrechnereinheit ST immer dann veranlaßt, wenn kein anderweitiger Leitungsabschluß vorhanden ist. Ein solcher Fall liegt beispielsweise für eine Amtsleitung dann vor, wenn der ein Amtsgespräch führende Teilnehmer eine Rückfrageverbindung aufgebaut hat. Solange sich dann die Amtsleitung in Wartestellung befindet wird der Abschlußwiderstand R1 bzw. R2 wirksam angeschaltet. Diese Anschaltung eines Abschlußwiderstandes erfolgt auch nach dem Aushängen durch einen Teilnehmer in denjenigen Aufbauphasen, in denen, wie z. B. in den Wählpausen, keine Abschlußeinheit wirksam ist. Durch die Anschaltung eines Abschlußwiderstandes wird verhindert, daß infolge der in den Leitungen bzw. in der Teilnehmerendeinrichtung vorhandenen Verstärker durch Rückkopplungsvorgänge ausgelöste Pfeiftöne entstehen.

Vermittels des entsprechend eingestellten Selektorbausteins kann auch eine zentrale Einrichtung, wie z. B. der Hörtonempfänger HTE bzw. der Tongenerator TG, an eine weiterführende Leitung bzw. an eine Teilnehmeranschlußleitung angekoppelt werden. Mit Hilfe des Hörtonempfängers HTE wird ein an der Leitung anliegender Hörton erkannt. Ein solcher Hörton kann beispielsweise einen Besetzton oder einen Wählton darstellen. Die Registrierung des Wähltones ist bei einem z. B. bei der Kurzwahl vorliegenden automatischen Aufbau einer Verbindung erforderlich. Die bei einer internen Gesprächsverbindung in bestimmten Vermittlungsphasen anzulegenden Hörtöne werden von dem Tongenerator TG abgegeben, der nach der wirksamen Anschaltung über den jeweils maßgebenden Selektorbaustein durch die Steuerrechnereinheit ST entsprechend getaktet wird.

Für die im vereinfachten Schaltbild gezeigte kleine Wählnebenstellenanlage soll Tastenwahl nach dem Mehrfrequenz- oder Impulswahlverfahren oder die Nummernschalterwahl möglich sein. Die Teilnehmerstellen T0 bis T5 können somit mit Tastatur und/oder Wählscheibe ausgerüstet sein. Wird durch die Steuerung aufgrund der entsprechenden Abtastung der Leitungszustände erkannt, daß eine für das Mehrfrequenzwahlverfahren vorgesehene Teilnehmerstelle eine Verbindung aufbauen will, so wird bis zur Beendigung der Wahl ein Mehrfrequenzcode-Empfänger MF zugeschaltet. Dies erfolgt über einen weiteren Selektorbaustein M9. Dieser wird durch die an seinen Adresseneingängen Ad91 bis Ad93 von der Steuerrechnereinheit angelegten Informationen eingestellt, so daß einer der Ausgänge A91 bis A98 aktiviert und die Mehrfrequenzcodeempfangseinrichtung MF mit der jeweils maßgebenden Leitung wirksam verbunden ist. Die von der Einrichtung MF jeweils empfangene Wahlinformation wird der Steuerrechnereinheit ST übermittelt, so daß sie die notwendigen Folgefunktionen veranlassen kann. Bei einer gewünschten externen Verbindung wird zur Betätigung des Impulswahlkontaktes i1 bzw. i2 ein zugehöriges Relais entsprechend gesteuert.

Wie bereits erwähnt, werden die über die weiterführenden Leitungen empfangenen Anreize sowie die von den einzelnen Teilnehmerstellen T0 bis T5 ausgehenden Anreize durch regelmäßiges Abtasten der mit den Leitungen bzw. mit den Teilnehmerstellen gekoppelten entsprechenden Empfangselemente durch die Steuerrechnereinheit erkannt. Diese Steuerrechnereinheit ST übernimmt die gesamte Steuerung der vermittlungstechnischen Funktionen. Sie besteht aus einem Prozessor P und dem Speichersystem S. In dem Programmspeicher Pr sind die zur Realisierung der logischen Verknüpfungen und Abläufe vermittlungs-, betriebs- und sicherheitstechnischer Art erforderlichen Programme enthalten. Im Arbeitsspeicher A werden Kurzzeitdaten, die beispielsweise den Zustand der Verbindungswege, den Schleifenzustand der Teilnehmeranschlußleitung und die gewählten Ziffern betreffen, abgespeichert. Der Kundendatenspeicher K enthält die Langzeitdaten. Ausgehend von einem vorgegebenen Standarddatensatz wird zumindest bei der Inbetriebnahme der Wählnebenstellenanlage sein Inhalt kundenindividuell verändert. Diese Änderung erfolgt über betriebstechnische Aufträge in der Anlage durch Eingabe über die Fernsprechstation der Abfragestelle. Dies kann beispielsweise nach Freigabe der für den Kundendatenspeicher vorhandenen Änderungssperre geschehen. Diese individuellen Daten betreffen beispielsweise die Anzahl der Teilnehmer, deren Berechtigungen und Kurzwahlziele. Da diese Daten bei Spannungsausfall nicht verloren gehen dürfen, sind sie in einem elektrisch lösch- und programmierbaren Festkörperspeicher abgelegt. Sie bleiben auch ohne Spannungsunterstützung so lange erhalten, bis sie durch neue Daten überschrieben werden. Der Gebührenspeicher GS, in dem die Gebührenimpulse getrennt nach Teilnehmerstellen und/oder nach den Amtsleitungen aufsummiert werden, kann auch als Teil des Kundendatenspeichers realisiert sein.

Dem Prozessor P werden als Eingangsdaten u. a. Zustandsdaten der Sprechstellen übermittelt. Durch den vorgenommenen Vergleich dieser neuen Daten mit den zuletzt abgespeicherten Daten werden Zustandsänderungen erkannt und demzufolge die solchen Änderungen zugeordneten Programme für deren Bearbeitung aufgerufen. Diese Bearbeitung kann dann als Ergebnis Ausgangsdaten in Form von Steuerbefehlen für konkrete Bauelemente zur Folge haben. Diese Steuerbefehle können beispielsweise die Betätigung von Relais bewirken.

Die durch die Bedientätigkeit eines Teilnehmers, ausgelösten und vermittlungstechnische Abläufe bedingenden Daten werden in der Teilnehmeranschlußschaltung erfaßt. Diese Möglichkeit ist in der Teilnehmeranschlußschaltung TA0, die der Teilnehmerstelle T0 zugeordnet ist, auszugsweise dargestellt. Es muß der Leitungsschleifenschluß, die Erdtastenbetätigung und bei einem zugrundeliegenden Impulswahlverfahren die Wahl erkannt werden. Hierzu ist jeweils mit der Leitungsader a und der Leitungsader b ein Auswertezweig gekoppelt. Jeder dieser Auswertezweige enthält einen Optokoppler 03 bzw. 04. Der Schaltzustand eines jeden Optokopplers wird von der Steuerrechnereinheit durdh die regelmäßige Abtastung seines nicht weiter dargestellten Sekundärkreises erkannt. Von jedem Optokoppler ist lediglich seine ihn mitbildende Diode gezeigt. An den Leitungszweig, der mit der Leitungsader a gekoppelt ist, wird die intern erzeugte Versor gungsspannung — Uv1 angelegt. Am anderen Zweig liegt über den aus Symmetriegründen vorhandenen Widerstand R12 das Gegenpotential in Form von Erdpotential. Durch die im erstgenannten Zweig neben dem Optokoppler 03 enthaltenen Elemente, nämlich dem Transistor T, dem Widerstand R12, der eine Referenzspannung liefernden Zener-Diode ZD und dem Widerstand R13 wird erreicht, daß der Stromfluß auf der Leitung auch im Kurzschlußfall auf einen vorgegebenen Wert begrenzt wird. Wird an der Teilnehmerstelle Schleifenschluß bewirkt, so sind beide Optokoppler 03 und 04 stromdurchflossen. Wird durch einen Teilnehmer die Erdtaste oder die ihr funktionsmäßig entsprechende Signaltaste, die für die Teilnehmerstelle T1 dargestellt und mit TA bezeichnet ist, betätigt, so ist lediglich ein Optokoppler, nämlich der Optokoppler 04 stromdurchflossen. Bei Unterbrechung der zugeordneten Leitungsschleife sind beide Optokoppler inaktiv. Diese geschilderten Zustände werden bei der Abtastung der Optokopplerzustände von der Steuerrechnereinheit ST erkannt und in die erforderlichen vermittlungstechnischen Funktionen umgesetzt. Es werden also die jeweiligen Schaltzustände der Nebenstellen bewertet. Beim Erkennen eines Erdtastendruckes wird festgestellt, ob der betreffende Nebenstellenteilnehmer ein Amtsgespräch führen darf, ob er ein ankommendes Amtsgespräch abfragen oder in Rückfrage gehen will. Der für eine Sprechverbindung gewünschte Teilnehmer wird dadurch gerufen, daß von der Steuerrechnereinheit das ihm individuell zugeordnete Rufrelais RU aktiviert wird. Spricht also durch ein entsprechendes Steuersignal eines der als Miniaturrelais ausgeführten Rufrelais RU0 bis RU5 an, so wird die intern erzeugte Rufspannung Ur über die dem Rufrelais jeweils zugehörigen Kontakte 1ru und 2ru angelegt. Für die Abfragestelle T0 erfolgt das wirksame Anliegen der Rufspannung durch die im Rhythmus des Rufsignals betätigten Kontakte 1ru0 und 2ru0. Für die übrigen Teilnehmerstellen gilt Entsprechendes.

Für die in der Zeichnung dargestellte kleine Wählnebenstellenanlage entfällt der sog. Internsatz, da die ansonsten einem solchen Verbindungssatz zugeteilten Aufgaben von der jeweiligen Teilnehmeranschlußschaltung in Verbindung mit der zentralen Steuerrechnereinheit ST erfüllt werden. Jeder Teilnehmer hat, wie bereits erwähnt, einen individuellen Speisestromkreis und durch zyklisches Abtasten werden die Informationen über das Teilnehmerverhalten an die zentrale Steuerrechnereinheit gemeldet. Die in bestimmten Vermittlungszuständen notwendigen Hörtöne werden über den jeweils zuständigen Koppelbaustein und den jeweiligen Übertrager an die Teilnehmeranschlußleitung und damit an die Teilnehmerstation angelegt. Die Art des Hörtones wird von der Steuerrechnereinheit dadurch bestimmt, daß über entsprechende Steuersignale für den Koppelbaustein die wirksame Anschaltung des Tongenerators vorgegeben ist.

Jede einer externen Leitung zugeordnete Anschlußeinheit sowie jede den Teilnehmerstellen T0 bis T5 zugeordnete Teilnehmeranschlußschaltung enthält jeweils einen Übertrager Ue. Insbesondere bei der Anwendung von in CMOS-Technik realisierten Selektorbausteinen für die Koppelfeldeinrichtung KF ergibt sich für den jeweils geschalteten Koppelpunkt eine hohe Durchgangsdämpfung. Um das Durchgangsverhalten zu verbessern, wird für den Übertrager ein vom Verhältnis 1 : 1 abweichendes Windungszahlenverhältnis gewählt. Diejenige Wicklung eines jeden Übertragers, die mit den Koppelbausteinen verbunden ist, weist gegenüber der jeweils anderen leitungsseitigen Wicklung eine höhere Windungszahl auf. Bei einem Übersetzungsverhältnis von beispielsweise 1 : 2 ist das bauelementebedingte ungünstige Durchgangsverhalten eines geschalteten Koppelpunktes wesentlich zu verbessern. Der Übertrager dient also nicht nur dazu, die Speisespannung von Koppelfeldseite abzuriegeln, sondern es werden auf Grund der ungleichen Windungszahlen für die Primär- und Sekundärseite des Übertragers bei einer geeignet gewählten Versorgungsspannung für die Koppelbausteine die Sprechwechselspannungen ausreichend verlustarm übertragen. Ohne diese besondere Wahl des Übersetzungsverhältnissses wären zur Durchführung eines automatischen Dämpfungsausgleiches aufwendige Maßnahmen, wie z. B. die Einschaltung von zusätzlichen Verstärkern notwendig. Derjenige Anschlußpunkt der koppelfeldseitigen Wicklung eines jeden Übertragers Ue1 bis Ue8, die nicht mit einem der Koppelbausteine M1 bis M8 verbunden ist, liegt über eine gemeinsame Leitung an einem bestimmten Bezugspotential, z. B. Erdpotential. Der andere Anschlußpunkt einer jeden dieser Wicklungen ist wie bereits geschildert mit einem Ausgang bestimmter Koppelbausteine der Koppelfeldeinrichtung verbunden. Diese Einrichtung ist einstufig ausgeführt und es wird eine vollkommene Erreichbarkeit erzielt. Für die kleine Wählnebenstellenanlage ist zumindest eine Anzeigeeinheit AZ vorgesehen, die in der Regel räumlich unmittelbar bei einer Teilnehmerstelle, vorzugsweise der Abfragestelle angeordnet ist. Es können auch mehrere räumlich verteilte Anzeigeeinheiten vorgesehen sein. Eine Anzeigeeinheit kann durch eine mehrstellige sog. Siebensegmentanzeige gebildet werden. Eine derartige Anzeigeeinheit wird von der Steuerrechnereinheit ST über eine Anzeigeanschaltebaugruppe AA angesteuert. Innerhalb dieser Baugruppe werden die von der Steuerrechnereinheit ausgegebenen Anzeigeinformationen in den für die unmittelbare Ansteuerung der Anzeigeeinheit notwendigen Code umgesetzt und zur Anpassung an die andere Verarbeitungsgeschwindigkeit zwischengespeichert. Durch diese Anzeigeeinheit können sowohl Informationen, die vom Betriebszustand unabhängig sind, als auch solche, die den Betriebszustand unmittelbar betreffen, dargestellt werden. Es kann damit durch einen Teilnehmer die für eine Sprechstelle aufgelaufene Gebührensumme und ggf. die Gebührensumme je Amtsleitung abgefragt und angezeigt werden. Die jeweils aktuellen Gebührensummen sollen in der Speichereinheit GS enthalten sein, wobei die nach jedem externen Gespräch notwendige Änderung des Gebührenstandes durch die Steuerrechnereinheit bewirkt wird. In diesem Zusammenhang sei erwähnt, daß die an einer Teilnehmerstelle angeordneten Gebührenzähler GZ die für ihre Ansteuerung notwendigen Gleichspannungsimpulse durch die Einheit GA erhantel. In dieser Einheit werden die von der Steuerrechnereinheit für jeden registrierten Zählimpuls gelieferten Ansteuerimpulse in für die Steuerung der Zähler geeignete Impulse umgesetzt. Sie werden dann über eine für jeden Zähler getrennt vorhandene Leitung übertragen. Weiterhin besteht die Möglichkeit, mit Hilfe dieses Anzeigeterminals die in dem entsprechenden Kurzrufnummernspeicher enthaltenen Rufnummerngeberziele zu kontrollieren und eine ggf. vorgenommene Änderung zu überprüfen. Die genannten Anzeigen können durch die Wahl einer bestimmten ihnèn jeweils zugeordneten Codeziffer z. B. von der Abfragestelle aus veranlaßt werden.

Von der Anzeigeeinheit AZ sind auch betriebsabhängige Informationen darstellbar. Es kann also der Belegtzustand der vorhandenen Externleitungen bzw. der Internwege signalisiert werden. Jede Stelle der mehrstelligen Anzeigeeinheit und/oder eine vorgegebene Kombination von Stellen kann eine bestimmte Verbindungsart kennzeichnen. Unter der Voraussetzung, daß gemäß einer bestimmten von der Verwaltung vorgesehenen Ausbaustufe gleichzeitig zwei Amtsverbindungen und eine Internverbindung bestehen können, kann festgelegt sein, daß die erste Stelle der Anzeigeeinheit immer denjenigen Teilnehmer mit seiner Rufnummer anzeigt, der auf der Amtsleitung 1 und die zweite Stelle denjenigen Teilnehmer, der auf der Amtsleitung 2 eine Gesprächsverbindung hat. Es ist dabei unterstellt, daß die insgesamt vorhandene Anzahl von Teilnehmerstellen einstellige Rufnummern zulassen. Die dritte und vierte Stelle der Anzeige kann dann die beiden Teilnehmerstellen anzeigen, die ein Interngespräch führen. Mit der fünften Stelle könnte der Belegungszustand eines zu einem speziellen Anschluß, z. B. zu einer Türfreisprecheinrichtung führenden Weges angezeigt werden. Es kann festgelegt sein, daß grundsätzlich ständig die Belegtzustände dargestellt werden und die voranstehend genannte Anzeige der betriebszustandunabhängigen Daten wie Gebührenstände und Rufnummerngeberziele auf einen besonderen Auftrag hin erfolgt. Es ist auch möglich, die Darstellung einer jeden der genannten Anzeigekategorien jeweils durch einen besonderen Auftrag zu veranlassen.

Mit dem der kleinen Wählnebenstellenanlage zugrunde liegenden programmgesteuerten System können umfangreiche Leistungsmerkmale in einfacher Weise erfüllt werden. Einzelne Leistungsmerkmale sind durch einen jeweils einzugebenden Auftrag in ihrem Umfang festlegbar. Es kann vorgesehen sein, daß bestimmte Schaltvorgänge die einzelne Leistungsmerkmale betreffen erst eine vorgegebene Zeitdauer nach einem diesbezüglichen Anreiz bewirkt werden. Diese Zeitdauer ist nun nicht als Festzeit beispielsweise durch eine Kondensatorentladung vorgegeben, sondern es besteht die Möglichkeit durch eine flexibel einzustellende Zeit die betreffenden Vorgänge auf die jeweils bestehenden Erfordernisse abzustimmen. Solche Vorgänge, die zeitabhängig zur Wirkung kommen sind beispielsweise die Rufweiterschaltung bzw. die Nachtschaltung und die Rückschaltung einer Gesprächsverbindung wenn bei der beabsichtigten Übergabe das Gespräch an der gewählten Nebenstelle nicht entgegengenommen wird.

Für die einzelne Anlage kann die gewünschte Zeit durch eine sogenannte betriebstechnische Eingabe durch eine Wartungsperson oder vom Teilnehmer in den Kundendatenspeicher K eingeschrieben werden. Dieser gewünschte Einschreibvorgang kann durch die Wahl einer hierfür vorgegebenen Kennziffer der Steuerung mitgeteilt werden. Die Bestimmung der gewünschten Zeitdauer wird beispielsweise durch das Produkt aus einer festgelegten Grundzeit und der anschließend eingewählten Ziffer festgelegt. Damit entspricht dann beispielsweise die Umschaltzeit für die automatische Nachtschaltung und die Zeit nach der ein nichtabgefragter Amtsanruf zu der programmierten Stelle weitergeschaltet wird dem wahlweise eingespeicherten Wert. Diese Zeitdauer wird im jeweils aktuellen Fall von der Steuerung aus dem Kundendatenspeicher abgefragt.

Die in der Zeichnung dargestellte kleine Wählnebenstellenanlage kann auch als Zweitnebenstellenanlage in Verbindung mit einer Hauptanlage eingesetzt werden. Sie wird damit grundsätzlich anstatt einer Nebenstelle an die Hauptanlage angeschlossen. Es sei angenommen, daß dies über die Leitungsadern a1 und b1 der Leitung Ltg1 erfolgt. Bei einem solchen Anschluß an eine Erst-Nebenstellenanlage werden Amtsgespräche immer über diese Anlage geführt. Zusätzlich können Gespräche mit den Teilnehmern in der Erst-Nebenstellenanlage geführt werden. Dies kann auch während eines Amtsgesprächs erfolgen. Um in der Hauptanlage eine Rückfrage, eine Umlegung und eine abgehende Amtsbelegung durch einen Teilnehmer der Zweit-Nebenstellenanlage zu ermöglichen ist in den jeweils maßgebenden Vermittlungsphasen die Anschlußleitung zu dieser Gegenanlage zu erden. Um einen Teilnehmer in der Erst-Nebenstellenanlage anzurufen wird nach dem Abheben des Handapparates die an der Teilnehmerstation vorhandene Erdtaste z. B. die Taste TA an der Teilnehmerstelle T1 gedrückt. Damit wird der Wählton aus der anderen Anlage empfangen. Nach Wahl der Rufnummer des gewünschten Teilnehmers wird mit seinem Melden die Verbindung hergestellt. Für den gewünschten Verbindungsverkehr von der Zweit-Nebenstellenanlage zu einem Amtsteilnehmer ist gleicherweise wie bei einem ankommenden Verkehr zum Zwecke einer Rückfrage und einer damit gegebenenfalls gekoppelten Übergabe bzw. Übernahme des Gespräches an der Anschlußleitung Erdpotential anzuschalten. Dies wird durch eine von einem Teilnehmer der Zweit-Nebenstellenanlage vorzunehmenden Kennzifferwahl in Rückfrage bewirkt. Während also bei Gesprächen von und zur Hauptanlage sowie im kommenden und gehenden Amtsverkehr eine Rückfrage und Umlegung innerhalb der Zweit-Nebenstellenanlage durch die Betätigung der Erdtaste eingeleitet und zurückgenommen werden kann ist durch den Teilnehmer der Zweit-Nebenstellenanlage für eine bei kommenden und gehenden Amtsverkehr in der Hauptanlage vorzunehmende Rückfrage zusätzlich eine Kennziffer bzw. ggf. eine Kennzifferkombination einzuwählen. Dies wird von der Steuerrechnereinheit aufgrund der innerhalb der jeweiligen Teilnehmeranschlußschaltung vorgenommenen Abtastung des Leitungszustandes erkannt. Als Folge davon wird von der Steuerrechnereinheit ein kurzzeitiges Ansteuersignal für die Relais E1 und E2 geliefert. Dadurch werden die Kontakte e1 und e2 betätigt, so daß während ihrer Schließungszeit Erdpotential an die zur Gegenanlage führende Leitung Ltg1 angelegt wird. Gleichzeitig wird mit der Auswertung der eingewählten Kennziffer automatisch die ursprünglich mit der erfolgten Betätigung der Erdtaste eingeleitete interne Rückfrage zurückgenommen. Die Anschaltung des Erdpotentials an die Außenleitung bewirkt, daß in der Gegenanlage beispielsweise auf Rückfrage umgeschaltet wird. Wird nun anschließend die Rufnummer des Hauptanlageteilnehmers gewählt so wird das Rückfragegespräch zum Teilnehmer aufgebaut. Für die Rücknahme einer Rückfrage ist die gleiche Prozedur wie für deren Einleitung vorzunehmen. Soll das Amtsgespräch durch den Teilnehmer in der Hauptanlage übernommen werden, so ist dies durch Betätigung seiner Erdtaste möglich. Das Anlegen des Erdpotentials an die Außenleitung vermittels einer einzuwählenden Kennziffer ermöglicht eine einfache und sichere Auswertung.

Die kleine Wählnebenstellenanlage wird über ein geregeltes Netzgerät aus der Netzwechselspannung Un gespeist. Die für die unterschiedlichen Baueinheiten bzw. Bauelemente der Anlage erforderlichen Versorgungsspannungen werden von den Teilwechselspannungen abgeleitet, die auf transformatorischen Wege aus der Netzwechselspannung gewonnen werden. Die Erzeugung der Teilwechselspannungen ist dabei auf zwei handelsübliche Transformatoren Tr1 und Tr2 verteilt. Mit einer solchen Aufteilung auf mindestens zwei Transformatoren ist es möglich die hinsichtlich von Störeinflüssen kritischen Spannungen von den anderen Spannungen zu trennen. Damit wird gleichzeitig eine günstigere Leistungsverteilung und eine bessere Wärmeverteilung im Wandgehäuse der jeweiligen Anlage erreicht. Die Aufteilung der Teilwechselspannungen auf die beiden Transformatoren, die durch das Element Si abgesichert sind könnte z. B. so vorgenommen werden, daß der Transformator Tr1 die für die Erzeugung der Teilnehmerspeisespannung und der Versorgungsspannung für die Relais und anderer elektrischer Bauteile notwendigen Teilwechselspannungen liefert. Aus diesen Teilwechselspannungen wird dann über ein geregeltes Netzgerät GE1 bzw. GE2 die erforderliche Gleichspannung abgegeben. Die Spannung Uv1 kann die für die Speisung der einzelnen Teilnehmerstellen notwendige Speisespannung sein. Die aus der anderen Teilwechselspannung erzeugte Gleichspannung Uv2 kann für die Spannungsversorgung der vorhandenen elektromechanischen Bauelemente, wie sie z. B. die Relais darstellen, verwendet werden. Weiterhin ist dem Transformator Tr1 noch die Erzeugung der Rufwechselspannung Ur, die über Kontakte der den Teilnehmerstellen individuell zugeordneten Rufrelais RU wirksam angelegt wird, zugeteilt.

Mit dem Transformator Tr2 werden diejenigen Teilwechselspannungen erzeugt, aus denen dann die Versorgungsspannungen für diejenigen Einheiten hergeleitet werden, die von Spannungsschwankungen, die durch das Teilnehmerverhalten ausgelöst werden, nicht beeinflußt werden sollen. Die beiden Spannungen Uv3 bzw. Uv4, die über die Netzgeräte GE3 bzw. GE4 aus den entsprechenden Teilwechselspannungen erzeugt werden, bilden dann z. B. die Versorgungsspannungen für die integrierten Baueinheiten. Diese Baueinheiten sind beispielsweise die für den Aufbau der Koppelfeldeinrichtung herangezogenen CMOS-Koppelbausteine M1 bis M8 sowie diejenigen Einheiten, die die Steuerrechnereinheit ST mitbilden. Der Spannungswert für die Gleichspannung Uv3 könnte beispielsweise + 5 Volt und der Spannungswert für die Gleichspannung Uv4 + 12 Volt betragen. Die geregelten Netzgeräte GE1 bis GE4 können Teileinheiten eines Gesamtnetzteiles darstellen.

Um Fehlfunktionen der Steuerrechnereinheit ST zu verhindern wird die Wechselspannung daraufhin überwacht ob Spannungseinbrüche auftreten. Zur Feststellung von Kurzunterbrechungen könnte unmittelbar die Netzwechselspannung herangezogen werden. Im Ausführungsbeispiel wird auf der Niederspannungsseite die der Netzspannung äquivalente Rufwechselspannung überwacht, um diejenigen Fälle, bei denen durch eine Unregelmäßigkeit in der Spannung ein nichtordnungsgemäßer Betrieb wahrscheinlich ist, rechtzeitig zu erkennen. Die überwachte Rufwechselspannung Ur steuert über eine Gleichrichteranordnung G einen Optokoppler 05. Durch die Einheit G soll wie angedeutet eine Vollweggleichrichtung der Rufwechselspannung vorgenommen werden, so daß am Ausgang bei ordnungsgemäßer Spannung Impulse mit einer Impulsfrequenz von 100 Herz entstehen. In diesem Rhythmus wird somit die im Optokoppler vorhandene Diode über den Widerstand R16 ausgesteuert. Der als Teil des Optokopplers 05 seine Ausgangsseite bildende Fototransistor, dessen Basiskreis die Widerstände R14 und R15 enthält, ist wie dargestellt emitterseitig mit einem Interrupt-Eingang I des Prozessors P gekoppelt. Es

wird somit im Regelfall ein Interrupt im 100 Herz-Rhythmus für den Prozessor verursacht. Durch programmtechnische Maßnahmen werden die Anzahl der Interrupte pro Zeiteinheit bewertet. Sind in der vorgegebenen Zeiteinheit, die beispielsweise einer Periodendauer der Wechselspannung entsprechen kann, nicht genügend Interrupt angefallen, so muß mit einem Ausfall der Versorgungsspannung für den Prozessor nach kurzer Zeit gerechnet werden. Es wird ein Rücksetzimpuls für den Prozessor gebildet, so daß fehlerhafte Programmabläufe vermieden werden. Durch die in den maßgebenden Netzgeräten enthaltenen Ladekondensatoren wird gewährleistet, daß die Versorgungsspannung für den Prozessor noch eine gewisse Zeit erhalten bleibt. Dadurch kann der erzeugte Rücksetzimpuls noch wirksam werden, so daß der Programmablauf auf einen vorgegebenen Ausgangspunkt zurückgeführt werden kann. Der Prozessor wartet auf Netzwiderkehr und beginnt dann mit dem Neustart. Mit dem Rücksetzimpuls kann gleichzeitig eine Inaktivierung von peripheren Einheiten, beispielsweise von Relais veranlaßt werden. Ein derartiges Relais kann beispielsweise durch Unwirksamschaltung der jeweils zugeordneten Treiberstufe in den inaktiven Zustand überführt werden. Damit wird erreicht, daß bestimmte Funktionen deren Wirksamwerden von der Betätigung eines Relais abhängig ist in nicht zulässiger Weise erfüllt werden. Es kann somit nicht der Fall eintreten, daß bei Vorhandensein eines ansonsten durch das Telefon zu bedienenden elektrischen Türöffners durch ein im Störungsfall betätigtes Relais die Türe unerwünscht geöffnet werden kann. Wird über eine vorgegebene Zeitspanne die ordnungsgemäße Anzahl von Spannungshalbwellen registriert, so gibt der Prozessor die Peripherie frei und startet mit den vermittlungstechnischen Aufgaben. Mit der Überwachung der Spannung wird also sichergestellt, daß beim Durchlaufen eines unzulässigen Spannungsbereiches der Versorgungsspannung keine Fehlfunktionen entstehen.

**Patentansprüche**

1. Schaltungsanordnung für eine kleine Wählnebenstellenanlage, bei der unter Mitwirkung einer die Vermittlungsvorgänge abwickelnden Steuerrechnereinheit (ST), die Zugriff zu Speichereinheiten (5) hat, in denen die für die vermittlungstechnischen Abläufe notwendigen Informationen enthalten sind, interne und externe Verbindungen durch die Einstellung einer entsprechenden Koppelfeldeinrichtung (KF) mit elektronischen Koppelpunkten möglich sind, dadurch gekennzeichnet, daß die Koppelfeldeinrichtung (KF) aus zumindest der Summe aus der Anzahl der weiterführenden Verbindungsleitungen (Ltg1, Ltg2) und der Anzahl der Teilnehmerstellen (T0...T5) entsprechenden Anzahl von in integrierter Technik hergestellten Selektorbausteinen (M1...M8) besteht, die jeweils mehrere, zumindest der Anzahl der Teilnehmer entsprechende Anschlußpunkte der ersten Art (A11-A18...A81-A88) und einen einer Teilnehmerstelle bzw. einer Verbindungsleitung zuzuordnenden Anschlußpunkt der zweiten Art (E1...E8) aufweist und bei denen über an entsprechenden Adresseneingängen (Ad11-Ad13...Ad81-Ad88) von der Steuerrechnereinheit (ST) anzulegende Steuerinformationen ein Anschlußpunkt (A11) aus den Anschlußpunkten der ersten Art (A11-A18,...A81-A88) auswählbar und mit dem Anschlußpunkt der zweiten Art (E1) verbindbar ist, daß jeder der den Teilnehmerstellen zugeordneten Selektorbausteine (M3...M8) über den Anschlußpunkt der zweiten Art (E3...E8) mit einer der Teilnehmerstellen (T0...T5) und über die Anschlußpunkte der ersten Art jeweils mit allen übrigen Teilnehmerstellen koppelbar ist und daß jeder der einer weiterführenden Verbindungsleitung zugeordneten Selektorbausteine (M1, M2) über den Anschlußpunkt der zweiten Art (E1, E2) mit der betreffenden Verbindungsleitung (Ltg1, Ltg2) und über die Anschlußpunkte der ersten Art (A11-A16, A21-A26) jeweils mit allen Teilnehmerstellen (T0...T5) koppelbar ist.

2. Schaltungsanordnung nach Anspruch 1, dadurch gekennzeichnet, daß an den Anschlußpunkten der ersten Art (A11-A18,...A81-A88) eines den weiterführenden Verbindungsleitungen bzw. den Teilnehmerstellen zugeordneten Selektorbausteines (M1-M8) im Zuge der Verbindungsherstellung während bestimmter Vermittlungsphasen benötigte Einrichtungen (HTE, TG) zusätzlich als zentrale Einrichtungen anschaltbar sind.

3. Schaltungsanordnung nach Anspruch 2, dadurch gekennzeichnet, daß als zentrale Einrichtung Tonfrequenzzeichen liefernde bzw. empfangende Einrichtungen (HTE, TG) anschaltbar sind.

4. Schaltungsanordnung nach einem der Ansprüche 1 bis 3, dadurch gekennzeichnet, daß mit den Anschlußpunkten der ersten Art (A17, A27) eines den weiterführenden Verbindungsleitungen (Ltg1, Ltg2) zugeordneten Selektorbausteines (M1, M2) ein auf die Leitungsverhältnisse wertemäßig abgestimmter Abschlußwiderstand (R1, R2) verbindbar ist.

5. Schaltungsanordnung nach einem der Ansprüche 1 bis 4, dadurch gekennzeichnet, daß für in einer bestimmten Vermittlungsphase notwendige zusätzliche Funktionen diejenige Einrichtung (MF), die diese Funktionen ermöglicht, jeweils über einen weiteren Selektorbaustein (M9) als eine zentrale Einrichtung anschaltbar ist.

6. Schaltungsanordnung nach einem der Ansprüche 1 bis 5, dadurch gekennzeichnet, daß sowohl jeweils ein Übertrager (Ue1, Ue2) als Verknüpfungselement zwischen der Koppelfeldeinrichtung (KF) und den weiterführenden Verbindungsleitungen (Ltg1, Ltg2) als auch die Teilnehmeranschlußschaltungen (TA0...TA5) jeweils mit bildender Übertrager (Ue3...Ue8) als Verknüpfungselement zwischen der Koppelfeldeinrichtung und den Teilnehmerstellen (T0...T5) verwendet wird, wobei für die Primär- und die Sekundärseite eines jeden Übertragers eine ungleiche Windungszahl gewählt ist und wobei die Wicklung mit der höheren Windungszahl jeweils zumindest mit einem Anschlußpunkt eines der genannten Selektorbausteine (M1...M8) verbunden ist.

7. Schaltungsanordnung nach einem der vorhergehenden Ansprüche, dadurch gekennzeichnet, daß als Selektorbaustein ein integrierter CMOS-Baustein vorgesehen ist.

## Claims

1. A circuit arrangement for a small PABX in which, with the cooperation of a control computer unit (ST) which handles the switching processes and which has access storage units (S) which contain the information items required for the switching processes internal and external connections can be established by the setting-up of a corresponding switching network device (Kf) comprising electronic crosspoints, characterised in that the switching network device (KF) comprise a number — corresponding at least to the sum of the number of outgoing connection lines (Ltg1 Ltg2) and the number of subscriber stations (T0...T5), of selector modules (M1...M8) which are produced in accordance with integrated technology and which each comprise a plurality of terminal points of the first type (A11-A18...A81-A88), which correspond at least to the number of subscribers, and a terminal point of the second type (E1...E8) which is to be assigned to a subscriber station and a connection line, and where, via items of control information which are to be applied to corresponding address inputs (Ad11-Ad13...Ad81-Ad88) by the control computer unit (ST) one terminal point (A11) of the terminal points of the first type (A11-A18, ...A81-A88) can be selected and can be connected to the terminal point of the second type (E1), that each of the selector modules (M3...M8) assigned to the subscriber stations can be coupled via the terminal point of the second type (E3...E8) to one of the subscriber stations (T0...T5) and via the terminal points of the first type to all the other subscriber stations, and that each of the selector modules (M1, M2) which is assigned to an outgoing connection line can be coupled via the terminal point of the second type (E1, E2) to the respective connection line (Ltg1, Ltg2) and via the terminal points of the first type (A11-A16, A21-A26) to all the subscriber stations (T0...T5).

2. A circuit arrangement as claimed in claim 1, characterised in that in the course of the connection establishment, devices (HTE, TG) required during specific switching phases can be additionally connected, as central devices. to the terminal points of the first type (A11-A18, ...A81-A88) of a selector module (M1-M8) assigned to the outgoing connection lines and to the subscriber stations.

3. A circuit arrangement as claimed in claim 2, characterised in that devices (HTE, TG) which supply and receive audible frequency signals can be connected as central devices.

4. A circuit arrangement as claimed in one of the claims 1 to 3, characterised in that a terminal resistor (R1, R2), the value of which is adapted to the line conditions, can be connected to the terminal points of the first type (A17, A27) of a selector module (M1, M2) assigned to the outgoing connection lines (Ltg1, Ltg2).

5. A circuit arrangement as claimed in one of the claims 1 to 4, characterised in that for additional functions required in a specific switching phase, the device (MF) which enables these functions can in each case be connected, as central device, via a further selector module (M9).

6. A circuit arrangement as claimed in one of the claims 1 to 5, characterised in that on the one hand a transformer (Ue1, Ue2) is used as linking element between the switching network device (KF) and the outgoing connection lines (Ltg1, Ltg2) and on the other hand a transformer (Ue3...Ue8), which forms part of the subscriber line circuits (TA0...TA5), is used as linking element between the switching network device and the subscriber stations (T0...T5), where an unequal number of turns is selected for the primary and secondary sides of each transformer, and where the winding which has the larger number of turns is in each case at least connected to one terminal point of one of the aforementioned selector modules (M1...M8).

7. A circuit arrangement as claimed in one of the preceding claims, characterised in that an integrated CMOS-module is provided as selector module.

## Revendications

1. Montage pour une petite installation automatique à postes supplémentaires, dans lequel, grâce au concours d'une unité (ST) formant calculateur de commande, qui exécute les opérations de commutation et a accès à des unités de mémoire (S) qui contiennent les informations nécessaires pour les processus techniques de commutation, des liaisons intérieures et extérieures sont possibles grâce au réglage d'un dispositif à champ de couplage correspondant (KF) comportant des points de couplage électroniques, caractérisé par le fait que le dispositif à champ de couplage (KF) est constitué par au moins la somme du nombre des lignes de jonction de retransmission (Ltg1, Ltg2) et du nombre, qui correspond au nombre des postes d'abonnés (T0...T5), de modules de sélection (M1...M8) réalisés selon la technique intégrée et dont chacun comporte plusieurs points de raccordement du premier type (A11-A18...A81-A88), qui correspondent au moins au nombre des abonnés, et un point de raccordement du second type (E1...E8), qui doit être associé à un poste d'abonné ou à une ligne de jonction, et dans lesquels un point de raccordement (A11) peut être sélectionné parmi les points de raccordement du premier type (A11...A18,...A80-A88) par l'intermédiaire d'informations de commande devant être appliquées à des entrées correspondantes d'adresses (Ad11-Ad13...Ad81-Ad88) par l'unité (ST) formant calculateur de commande, et peut être relié au point de raccordement du second type (E1), que chacun des modules de sélection (M3...M8), associés aux postes d'abonnés, peut être accouplé par l'intermédiaire du point de raccordement du second type (E3...E8) à l'un des postes d'abonnés (T0...T5) et par l'intermédiaire des points de raccordement du premier type, respectivement à tous les autres postes d'abonnés, et que chacun des modules de sélection (M1, M2) associés à une ligne de jonction de retransmission, peut être accouplé par l'intermédiaire du point de raccordement du second type (E1, E2) à la ligne de jonction considérée (Ltg1, Ltg2) et par l'intermédiaire des points de raccordement du premier type (A11-A16, A21-A26) respectivement à tous les postes d'abonnés (T0...T5).

2. Montage suivant la revendication 1, caractérisé par le fait que des dispositifs (HTE, TG) nécessaires pendant des phases déterminées de commutation au cours de l'établissement de la liaison, peuvent être raccordés en supplément en tant que dispositifs centraux aux points de raccordement du premier type (A11-A18,...A81-A88) d'un module de sélection (M1-M8) associé aux lignes de jonction de retransmission ou aux postes d'abonnés.

3. Montage suivant la revendication 2, caractérisé par le fait que des dispositifs (HTE, TG), qui délivrent ou reçoivent des signaux à fréquence vocale, peuvent être raccordés au dispositif central.

4. Montage suivant l'une des revendications 1 à 3, caractérisé par le fait qu'une résistance de terminaison (R1, R2), dont la valeur est accordée sur les conditions de ligne, peut être reliée aux points de raccordement du premier type (A17, A27) de l'une des lignes de jonction de retransmission (Ltg1, Ltg2).

5. Montage suivant l'une des revendications 1 à 4, caractérisé par le fait que pour des fonctions supplémentaires nécessaires pendant une phase déterminée de commutation, le dispositif (MF), qui permet ces fonctions, peut être raccordé en tant que dispositif central respectivement par l'intermédiaire d'un autre module de sélection (M9).

6. Montage suivant l'une des revendications 1 à 5, caractérisé par le fait qu'on utilise aussi bien un transformateur (Ue1, Ue2) en tant qu'élément de liaison entre le dispositif à champ de couplage (KF) et les lignes de jonction de retransmission (Ltg1, Ltg2), qu'un transformateur (Ue3...Ue8), qui forme simultanément respectivement les circuits de raccordement d'abonnés (TA0...TA5), en tant qu'élément de liaison entre le dispositif à champ de couplage et les postes d'abonnés (T0...T5), auquel cas un nombre différent de spires est choisi pour le côté primaire et pour le côté secondaire de chaque transformateur et l'enroulement possédant le nombre de spires le plus élevé est relié respectivement au moins à un point de raccordement de l'un desdits modules de sélection (M1...M8).

7. Montage suivant l'une des revendications précédentes, caractérisé par le fait qu'il est prévu, comme module de sélection, un module CMOS intégré.

FIG 1a

0 120 459

# FIG 1b